# EUROPÄISCHE PATENTSCHRIFT

(11) **EP 2 304 212 B1**
(45) Veröffentlichungstag und Bekanntmachung des Hinweises auf die Patenterteilung: **28.02.2018**
(21) Anmeldenummer: 09777017.6
(22) Anmeldetag: 08.07.2009
(51) Int. Cl.: F02K 9/34, F02K 9/36, F41F 3/042, F41F 3/06

(54) **FESTSTOFFTRIEBWERK**
SOLID-PROPELLANT ROCKET MOTOR
MOTEUR-FUSÉE À MATIÈRE SOLIDE

(30) Priorität: 16.07.2008 DE 102008033429
(43) Veröffentlichungstag der Anmeldung: 06.04.2011
(73) Patentinhaber: Diehl Defence GmbH & Co. KG, 88662 ÜBERLINGEN (DE)
(72) Erfinder: FISCH, Peter, Gerd, 88662 Überlingen (DE); ELSNER, Gerd, 88690 Oberuhldingen (DE)
(74) Vertreter: Diehl Patentabteilung
(86) Internationale Anmeldenummer: PCT/EP2009/004917
(87) Internationale Veröffentlichungsnummer: WO 2010/006724

(56) Entgegenhaltungen:
- DE-A1- 1 751 617
- DE-B- 1 223 624
- JP-A- 49 109 711
- US-A- 2 503 270
- US-A- 2 522 113
- US-A- 2 748 702
- US-A- 3 672 170
- US-A- 3 908 933
- US-A- 4 936 525

## Beschreibung

Die Erfindung geht aus von einem Feststofftriebwerk mit einer Außenhülle und einer innerhalb der Außenhülle angeordneten Brennkammer.

Bei der Auslegung von Feststofftriebwerken ist zu berücksichtigen, dass diese im Betrieb auftretende, teilweise als Inertialbelastungen bezeichnete Trägheitskräfte und Auftriebskräfte sowie resultierende Biegekräfte aufnehmen und diesen standhalten müssen. In der Praxis werden Feststofftriebwerke daher häufig aus einem Metallrohr gefertigt, wobei die Rohrwandung als Außenhülle dient und das Rohrinnere die Brennstoffkammer darstellt. Das oftmals einstückig gefertigte Metallrohr stellt somit gleichzeitig die Außenhülle wie auch die Brennkammer zur Verfügung.

Zur Reduktion des Gewichts wie auch des Bauvolumens der Feststofftriebwerke werden möglichst dünnwandige Metallrohre eingesetzt. Weiterhin werden Triebstoffwerke neuerdings anstatt aus Metall aus Faserverbundstrukturen gefertigt. Können die oben beschriebenen Kräfte im Falle der meist isotrop vorliegenden Metalle von einem homogenen Metallrohr aufgenommen werden, muss in einer Faserverbundstruktur für jede Kraftkomponente eine entsprechend gerichtete Faserlage zur Verfügung gestellt werden. Während also die Metallrohrwandung in der Lage ist, die oben genannten Trägheits- und Auftriebskräfte sowie daraus resultierende Biegekräfte und auch die Druckkräfte aus der Brennkammer in einer einheitlichen Lage aufzunehmen, müssen bei einer Faserverbundstruktur verschiedene Lagen unterschiedlicher Faserorientierung zusammenwirken, um dies zu gewährleisten. Bislang werden daher verschiedene Lagen mit unterschiedlicher Faserorientierung unter Verwendung einer Matrix zu einem Rohr aus Faserverbundstrukturen vermengt, welches anstelle des beschriebenen schwereren Metallrohres verwendet werden kann.

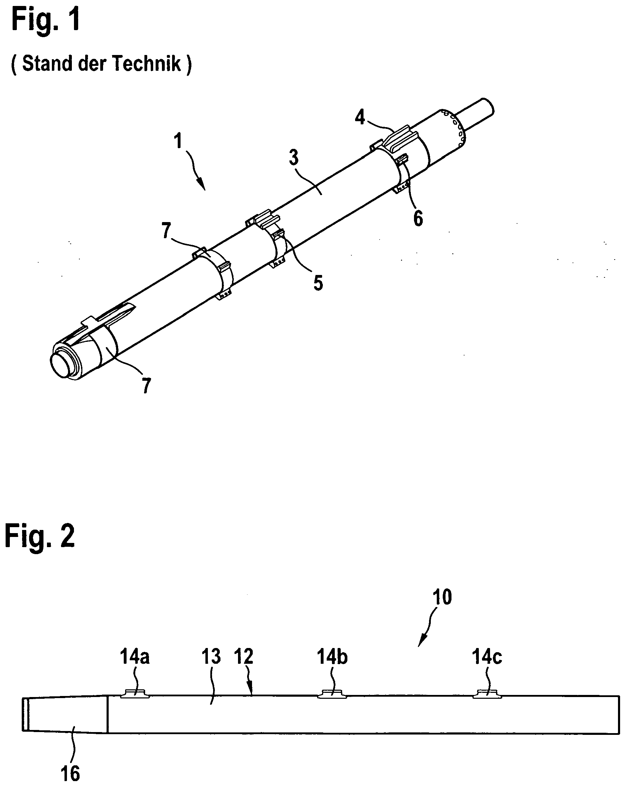

Figur 1 zeigt in perspektivischer Darstellung schematisch ein Feststofftriebwerk 1 gemäß dem Stand der Technik, bei welchem die Außenhülle 3 durch ein einstückiges Metallrohr oder eine einstückige Faserverbundstruktur der oben beschriebenen Art gebildet ist. Triebwerke werden allgemein als Antrieb oder gar als Träger und Antrieb für Objekte verwendet. Als Raketen tragen sie beispielsweise Gefechtsköpfe oder Aufklärungseinrichtungen. In jedem Fall sind die Triebwerke mit diesen Objekten oder weiteren Bauteilen, beispielsweise Tragflächen, zu verbinden. Hierzu müssen Beschläge oder die weiteren Bauteile selbst an dem Triebwerk befestigt werden. Figur 1 zeigt beispielhaft derartige Beschläge 5 und 6, welche im dargestellten Fall für die Aufnahme von Tragflächen vorgesehen sind. Als Beispiel eines weiteren Beschlages ist ein Aufnahmeschuh 4 dargestellt, welcher dazu dient, das Triebwerk an einem Transportmittel, beispielsweise einem Flugzeug oder Hubschrauber zu befestigen.

Da die Innenwandung der Außenhülle 3 gleichzeitig als Brennkammer dient, ist sie im Betrieb mit Druck beaufschlagt. Die Befestigung von Beschlägen, insbesondere der Beschläge 4, 5, 6, oder von Anbauten allgemein gestaltet sich daher schwierig. So können diese beispielsweise nicht ohne weiteres mit der Außenhülle 3 verschraubt werden, da das Einbringen von Schrauben oder Bohrlöchern in die Außenhülle deren Druckstabilität beeinträchtigt. Zudem kann es zu Undichtigkeiten in der Brennkammer kommen, sodass deren Verdämmwirkung und damit die Beschleunigungswirkung des Triebwerks beeinträchtigt ist. Im Hinblick auf eine möglichst dünnwandige Außenhülle ist es zudem erforderlich, bei massiven Krafteinleitungen, wie sie beispielsweise an Tragflächen entstehen, eine erhöhte Belastbarkeit der Außenhülle zu gewährleisten, wozu stabilisierende Maßnahmen zu ergreifen sind. Diese können, wie im Beispiel der Figur 1 gezeigt, unter anderem in dem Vorsehen von Aufdickungen 7 bestehen. Da diese Aufdickungen oder ähnliches wiederum nicht ohne weiteres an der Außenhülle befestigt werden kann, gestaltet sich deren Anbringung aufwändig. Dies um so mehr, als die Übergänge zu den Aufdickungen im Hinblick auf sanfte Steifigkeitsübergänge zu optimieren sind.

Die JP 49 109 711 A zeigt ein Triebwerk, bei welchem innerhalb einer äußeren Hülle eine weitere, einen Brennstoff beherbergende Hülle vorgesehen ist.

Die US 2 503 270 A beschäftigt sich ebenfalls mit Raketentriebwerken. Um zu verhindern, dass aufgrund der hohen Trägheitskräfte bei einem Raketenstart und während der Verbrennung des Brennstoffs entstehender turbulenter Gasströme der Brennstoff aus der Brennkammer des Triebwerks herausgedrückt wird, ist vorgesehen, dass das Triebwerk ein Gehäuse in Form eines Hohlzylinders umfasst, in dem eine Fängervorrichtung in Form einer zylindrischen Röhre für den Brennstoff angeordnet ist. Diese Röhre kann in ihrem Inneren mit Querstreben oder mit Einkerbungen versehen sein, um für ein Zurückhalten des Brennstoffs zu sorgen.

Die US 3 672 170 A offenbart ein Triebwerk, bei welchem der Brennstoff spannungsfrei gelagert ist. Der Brennstoff ist in einem aus elastischem Material gefertigten, becherförmigen Gehäuse angeordnet. Dieses Gehäuse befindet sich wiederum in einer Außenhülle. Der Zwischenraum zwischen Gehäuse und Außenhülle ist mit einer Flüssigkeit gefüllt. Auf der offenen Seite des Gehäuses ist zwischen Gehäuse und Außenhülle eine Dichtung vorgesehen. Einige Sekunden nach Beaufschlagung des Triebwerks brennt das Gehäuse durch und die Dichtung erodiert, wobei der Brennstoff weiterhin abbrennt.

Aus der US 2 522 113 A ist eine Brennkammer für Raketen oder andere angetriebene Vorrichtungen bekannt. Um Beschädigungen an den Oberflächen zu vermeiden, die dem Verbrennungsvorgang einer Pulverladung ausgesetzt sind, ist die Pulverladung in einer Metallhülle untergebracht, die von einer größeren, Kühlwasser gefüllten Kammer umgeben ist. Die an einem Ende offen ausgelegte Metallhülle ist durch einen mit Öffnungen versehenen Dichtungsring in der Kammer gleitend gelagert. Durch den während des Verbrennungsprozesses entstehenden Druck wird Kühlwasser durch die Öffnungen des Rings herausgedrückt und sorgt für Kühlung der Kammerwände.

Mit der Problematik einer unbeabsichtigten Entzündung eines Triebwerks beschäftigen sich die zuvor aufgeführten Dokumente des Standes der Technik nicht.

Der vorliegenden Erfindung liegt die Aufgabe zugrunde, ein Feststofftriebwerk zur Verfügung zu stellen, bei welchem Anbauten vereinfacht an der Außenhülle befestigt werden können und welches gegenüber dem Stand der Technik sicherer gegenüber einer unbeabsichtigten Entzündung ist.

Diese Aufgabe wird gelöst durch ein Feststofftriebwerk gemäß den Merkmalen des Anspruchs 1.

Durch die Ausführung der Brennkammer als gesondertes, von der Außenhülle getrenntes Bauteil können Anbauten, insbesondere Beschläge, ohne Beeinträchtigung der Druckaufnahmefähigkeit der Brennkammer an der Außenhülle befestigt werden. Entsprechende Montagearbeiten können ausgeführt werden, ohne dass hierbei die Brennkammereigenschaften beeinträchtigt werden.

Unter einer Außenhülle ist dabei eine äußere Umhüllung des Feststofftriebwerks zu verstehen, welche nicht notwendigerweise eine geschlossene Oberfläche aufweist. Beispielsweise kann die Außenhülle gebildet sein durch die Wandung eines Rohres mit offenen Stirnseiten. Weiterhin bezeichnet eine Brennkammer einen nicht geschlossenen Hohlraum, in welchem ein Festbrennstoff angeordnet werden kann und der geeignet ist, den Festbrennstoff während seines Abbrandes hinreichend zu verdämmen, sodass ein Materialaustritt aus der Brennkammer in eine Vortriebswirkung umgesetzt werden kann.

Die Außenhülle wie auch die Brennkammer können sowohl in konventioneller Weise aus Metallen oder Metalllegierungen oder auch aus Faserverbundstrukturen gefertigt sein.

Bei einer bevorzugten Ausgestaltungsvariante der Erfindung ist die Außenhülle dazu ausgelegt, im Betrieb des Triebwerks auftretende Trägheitskräfte und Trägheitsmomente aufzunehmen. Weiterhin ist die Brennkammer dazu ausgelegt, Drücke, die beim Betrieb in der Brennkammer entstehen, aufzunehmen. Die Anforderung an das einzelne Bauteil, d. h. die Außenhülle oder die Brennkammer, werden dabei reduziert, sodass sich bei der Konzeptionierung und Realisierung des jeweiligen Bauteils mehr Freiheiten ergeben. Jedes Bauteil für sich genommen ist somit einfacher zu optimieren, insbesondere hinsichtlich des verwendeten Werkstoffes. Dies erweist sich dann als besonders vorteilhaft, wenn sowohl die Außenhülle wie auch die Brennkammer aus Faserverbundwerkstoffen gefertigt werden. Für die Fertigung der Außenhülle werden in diesem Fall Faserorientierungen und die Faseranzahl derart gewählt, dass die im Betrieb des Triebwerks auftretenden Trägheitskräfte und Trägheitsmomente sowie resultierende Biegekräfte aufgenommen werden können. Bei der Brennkammer hingegen wird die Anzahl und Orientierung der Fasern an den aufzunehmenden Druckkräften ausgerichtet. Außenhüllen gemäß dem Stand der Technik, welche gleichzeitig die Brennkammer darstellten (vgl. oben), mussten in der Summe die gleichen Kräfte aufnehmen wie die bei der vorliegenden Erfindung getrennten Bauteile Außenhülle und Brennkammer. Der Unterschied besteht im Wesentlichen darin, dass die Faserlagen bei der vorliegenden Erfindung nach Funktion getrennt und entweder in der Außenhülle oder in der Brennkammer enthalten sind. Infolgedessen ergibt sich bei der Erfindung bei Einsatz von Faserverbundwerkstoffen kein relevanter Gewichtsnachteil gegenüber bekannten Feststofftriebwerken. Das Triebwerk ist zudem unempfindlicher gegenüber äußeren Einflüssen, insbesondere mechanischen Einwirkungen, da die empfindliche Brennkammer, die zur Aufnahme der Druckkräfte ausgelegt ist, nach außen durch die Außenhülle geschützt ist.

Bei einer vorteilhaften Ausführungsvariante der Erfindung ist die Brennkammer beabstandet von der Außenhülle angeordnet. Der dadurch gebildete Hohlraum zwischen der Außenhülle und der Brennkammer verringert einerseits den Wärmeübergang von der einer aerokinetischen Aufheizung ausgesetzten Außenhülle auf die Brennkammer. Andererseits können Bauteile, welche bislang an einer äußeren Mantelfläche der Außenhülle befestigt wurden, aerodynamisch günstig zwischen der Brennkammer und der Außenhülle angeordnet werden. Neben der Verbesserung der Aerodynamik des Triebwerks kann so ein zusätzlicher Schutz dieser Bauteile gegenüber äußeren Einflüssen bewerkstelligt werden. Beispielsweise können Kabel, ganze Kabelbäume, Datensendeeinrichtungen, Datenempfangseinrichtungen, Antennen oder Steckverbinder zwischen der Brennkammer und der Außenhülle angeordnet sein. Ferner können Aufdickungen oder anderweitig stabilisierende Bauteile zwischen der Außenhülle und der Brennkammer angeordnet werden, sodass diese ebenfalls die aerodynamischen Eigenschaften des Triebwerks nicht beeinträchtigen. Sofern ein Triebwerk mit Innenströmungen vorliegt, sind die Bauteile hinsichtlich der Innenströmungen strömungsgünstig zwischen der Außenhülle und der Brennkammer anzuordnen.

Eine bevorzugte Ausgestaltungsvariante der Erfindung sieht vor, dass die Brennkammer in wenigstens einem Spant gehaltert ist, welcher zwischen der Außenhülle und der Brennkammer angeordnet ist. Dies ermöglicht eine einfache, von der Außenhülle beabstandete Befestigung der Brennkammer in der Außenhülle. Die Innenwandung der Außenhülle ist dabei vorteilhafterweise sehr einfach, nämlich glatt, ausführbar, sodass für die Außenhülle kein erhöhter Fertigungsaufwand gegeben ist. Insbesondere sind weder an der Außenwandung noch an der Innenwandung der Außenhülle Aufdickungen erforderlich. Um eine ungehinderte Kabelführung im Bereich zwischen der Brennkammer und der Außenhülle zu ermöglichen, weist der wenigstens eine Spant vorzugsweise Aussparungen zur Durchführung von Kabeln auf.

Der wenigstens ein Spant kann vorteilhaft als stabilisierende Maßnahme an Stelle der anhand von Figur 1 beschriebenen äußeren Aufdickungen des Standes der Technik eingesetzt werden. Zum einen kann dies bei weiterhin glatter Ausgestaltung der Innenwandung der Außenhülle erfolgen (s. o.). Zum anderen wird der Spant als stabilisierendes Mittel innerhalb der Außenhülle angeordnet, sodass sich bei gleichem Kaliber eine höhere Biegefestigkeit erzielen lässt als bei Außenhüllen mit an der äußeren Mantelfläche angeordneten Stabilisierungsmitteln, beispielsweise Aufdickungen.

Eine bevorzugte Ausführungsvariante sieht vor, dass die Brennkammer in dem wenigstens einen Spant formschlüssig gehaltert ist. Dies ermöglicht eine schnelle Montage der Brennkammer.

Eine Weiterbildung dieser Ausgestaltungsvariante sieht eine maßtolerante Halterung der Brennkammer in dem wenigstens einen Spant vor. Dies trägt dem Umstand Rechnung, dass Triebwerke über ihre Länge hinweg aufgrund des weitgehend minimierten Gewichts leichte Verformungen aufweisen. In diesen Fällen kann durch die maßtolerante Halterung die Montage wie auch die Demontage der Brennkammer vereinfacht durchgeführt werden. Zudem können Reparatur- und Wartungsarbeiten vereinfacht ausgeführt werden. Ist eine aufgrund der maßtoleranten Halterung verbleibende Beweglichkeit der Brennkammer unerwünscht, so kann diese durch Klemmung der Brennkammer beseitigt werden.

Eine Weiterbildung der Erfindung sieht vor, dass zumindest ein Spant mit einem Aufnahmeschuh verbunden ist, welcher mittelbar oder unmittelbar an einer äußeren Mantelfläche der Außenhülle anliegt. Wie oben erläutert, werden derartige Aufnahmeschuhe eingesetzt, um Triebwerke beispielsweise an Flugzeugen oder Hubschraubern zu befestigen. Durch die Verbindung des Aufnahmeschuhs mit dem die Brennkammer halternden Spant kann die auf eine gefüllte Brennkammer wirkende Gewichtskraft vorteilhaft auf den Aufnahmeschuh übertragen werden, ohne zunächst die Außenhülle damit zu beaufschlagen.

Eine bevorzugte Weiterbildung dieser Ausgestaltungsvariante sieht vor, dass die Außenhülle zwischen dem wenigstens einen Spant und dem mit diesem verbundenen Aufnahmeschuh geklemmt ist. Auf diese Weise kann die Außenhülle an der Brennkammer über den Spant befestigt werden, ohne dass hierzu zusätzliche Verbindungsmittel erforderlich sind. Dies vermag die Montage wie auch die Demontage des Triebwerks zu beschleunigen.

Alternativ kann die Außenhülle mit dem wenigstens einen Spant verbunden, beispielsweise verschraubt sein. Dies kann sich je nach Fertigungsart und Einsatzzweck des Triebwerks als vorteilhaft erweisen.

Bei einer bevorzugten Ausgestaltungsvariante der Erfindung ist die Brennkammer mittels wenigstens einer Schürze gegen ein Verschieben gegenüber der Außenhülle gesichert. Dies gewährleistet eine, abgesehen vom Abbrand des Festbrennstoffes, gleich bleibende Ballistik des Triebwerks.

Bei einer besonders bevorzugten Ausgestaltungsvariante der Erfindung ist die Außenhülle aus einem hochtemperaturfesten Werkstoff gefertigt. Vorzugsweise kommt hier ein Faserverbundwerkstoff mit einer Hochtemperaturmatrix zum Einsatz. Die Begriffe hochtemperaturfester Werkstoff bzw. Hochtemperaturmatrix sind dabei so zu verstehen, dass sie geeignet sind, der beim Betrieb des Triebwerks auftretenden aerokinetischen Aufheizung zu widerstehen. Diese ist umso größer, je schneller sich ein Triebwerk fortbewegt. Die Hochtemperaturfestigkeit ist daher insbesondere für Hochgeschwindigkeitsflugkörper wie Raketentriebwerke zu berücksichtigen. Alternativ zur Verwendung eines hochtemperaturfesten Werkstoffs für die Außenhülle besteht die Möglichkeit, die äußere Mantelfläche der Außenhülle mit einer Temperaturschutzschicht zu überziehen, beispielsweise einer Keramikschicht. Die Temperaturschutzschicht ist dabei derart auszulegen, dass ein für die Außenhülle verwendetes Material durch einen Temperaturübergang von der Temperaturschutzschicht auf die Außenhülle nicht beeinträchtigt wird.

Die Erfindung sieht vor, dass zur thermischen Isolation eines in der Brennkammer anordenbaren Festbrennstoffes gegenüber der Brennkammer eine thermische Isolierung innerhalb der Brennkammer vorgesehen ist. Ergänzend zu der gegebenenfalls durch die beabstandete Anordnung der Brennkammer von der Außenhülle gegebene thermische Isolierung verringert die in der Brennkammer angeordnete thermische Isolierung den Wärmeübergang von der Außenhülle über die Brennkammer auf den Festbrennstoff. Dies erhöht die Sicherheit des Triebwerks gegenüber einer unbeabsichtigten Entzündung, beispielsweise im Brandfall, da eine Erwärmung des Festbrennstoffes auf dessen Zündtemperatur verzögert wird. Dieser Sicherheitsgewinn trägt zur Erfüllung so genannter Insensitive-Munition-Forderungen bei. Die Brennkammer ist dabei vorzugsweise im Wesentlichen vollständig mit der thermischen Isolierung ausgekleidet. Lediglich funktionale Bereiche, wie beispielsweise eine Durchführöffnung für Anzünder oder ein Gasleitrohr, sind nicht mit einer thermischen Isolierung versehen.

Zum Zwecke der Erfüllung der Insensitive-Munition-Forderungen und damit zur Erhöhung der Sicherheit ist die Brennkammer gemäß der Erfindung aus einem oberhalb einer Grenztemperatur instabilen Werkstoff gefertigt, wobei die Grenztemperatur kleiner oder gleich einer Zündungstemperatur eines in der Brennkammer anordenbaren Feststoffes gewählt ist. Auf diese Weise wird die Brennkammer bei Erhitzen instabil, bevor die Zündungstemperatur des Festbrennstoffes erreicht ist und dieser sich entzündet. Die zunehmende Instabilität verringert die Verdämmwirkung der Brennkammer, sodass ein bei Erreichen oder Überschreiten der Zündungstemperatur sich aufbauender Druck durch die Brennkammer entweichen kann. Der Festbrennstoff kann infolgedessen abbrennen, ohne dass es zu einer Explosion kommt. Dieser Sicherheitsmechanismus wirkt auch bei einem langsamen Temperaturanstieg und trägt somit zur Erfüllung so genannter Slow-Cook-Off-Forderungen bei.

Einen weiteren Sicherheitsgewinn stellen Überdrucköffnungen in der Außenhülle dar, welche eine Weiterbildung der Erfindung vorsieht. Da die Verdämmwirkung im Betrieb des Triebwerkes durch die Brennkammer gewährleistet ist, können solche Überdrucköffnungen in der Außenhülle bei der Erfindung vorgesehen werden. Entsteht nun beispielsweise bei einem Brandfall, im Triebwerk unbeabsichtigt ein erhöhter Druck aufgrund eines gezündeten Festbrennstoffes, so kann dieser durch die Überdrucköffnungen in der Außenhülle entweichen, sobald keine Verdämmwirkung der Brennkammer mehr gegeben ist. Die Verdämmwirkung der Brennkammer kann beispielsweise in der oben beschriebenen Weise infolge der Verwendung eines instabilen Werkstoffes entfallen sein. Auf diese Weise wird verhindert, dass in solch einem Fall eine Verdämmwirkung durch die Außenhülle zu einer unbeabsichtigten Explosion des Triebwerks führt. Die Überdrucköffnungen sind dabei vorzugsweise durch Montageöffnungen gebildet, welche beispielsweise durch Kabeldurchlassöffnungen oder Wartungsöffnungen realisiert sein können.

Bei einer vorteilhaften Ausgestaltungsvariante der Erfindung ist die Brennkammer als modulares Bauteil ausgeführt. Auf diese Weise kann die Brennkammer nach Abbrand bzw. nach Überschreiten der Haltbarkeit/des Haltbarkeitsdatums des in der Brennkammer angeordneten Festbrennstoffes einfach gegen eine neue ausgetauscht werden. Der Rest des Triebwerks kann grundsätzlich unverändert wieder verwendet werden. Ein Auswaschen der Außenhülle, wie es bei konventionellen Metalltriebwerken mit einstückiger Wandung praktiziert wird, kann unterbleiben. Ein Austausch des aus Brennkammer, thermischer Isolierung und darin angeordnetem Festbrennstoff bestehenden Treibsatzes kann somit aufwandsgünstiger durchgeführt werden als bei Triebwerken gemäß dem Stand der Technik. Wird eine Brennkammer aus Metall verwendet, besteht zwar die grundsätzliche Möglichkeit, diese auszuwaschen und wieder zu verwenden. Dies hat sich jedoch als aufwändiger erwiesen als ein kompletter Treibsatzwechsel. Des Weiteren wären Gewichtsnachteile gegeben. Die modulare Bauweise vereinfacht zudem eine dezentrale Fertigung des Triebwerks. Durch die leichte Austauschbarkeit der Brennkammer bzw. des Treibsatzes ergeben sich weiterhin erweiterte Reparatur- und Wartungsmöglichkeiten.

Die vorliegende Erfindung wurde stets im Zusammenhang mit Festbrennstoffen beschrieben und als Feststofftriebwerk bezeichnet. Grundsätzlich kann die Erfindung jedoch auch in Verbindung mit Hybridtriebwerken oder Geltriebwerken Verwendung finden.

Im Folgenden wird die Erfindung anhand von Figuren näher erläutert. Soweit zweckdienlich, sind gleichwirkende Elemente hierin mit gleichen Bezugszeichen versehen. Es zeigen:
- Fig. 1: Feststofftriebwerk gemäß dem Stand der Technik
- Fig. 2: Seitenansicht eines ersten Ausführungsbeispiels eines erfindungsgemäßen Feststofftriebwerks
- Fig. 3: Schematische Schnittdarstellung durch das Feststofftriebwerk aus Figur 2
- Fig. 4: Vergrößerte Darstellung des linken Bereichs der Figur 3
- Fig. 5: Vergrößerte Darstellung des rechten Endbereichs der Figur 3
- Fig. 6: Projektionsdarstellung des Schnittes aus Figur 3
- Fig. 7: Explosionsdarstellung des Feststofftriebwerks aus Figur 1
- Fig. 8: Vergrößerte Darstellung des linken Endbereichs der Figur 7
- Fig. 9: Vergrößerte Darstellung des rechten Endbereichs der Figur 7
- Fig. 10: Schematische Teilschnittdarstellung eines zweiten Ausführungsbeispiels eines erfindungsgemäßen Triebwerks

Figur 2 zeigt in schematischer Darstellung eine Seitenansicht eines ersten Ausführungsbeispiels eines erfindungsgemäßen Feststofftriebwerks. Wie der Darstellung der Figur 2 entnommen werden kann, weist das Feststofftriebwerk 10 eine Außenhülle 13 auf, an deren linke Stirnseite sich ein Gefechtskopf 16 anschließt. An einer äußeren Mantelfläche 12 der Außenhülle 13 sind im dargestellten Ausführungsfall drei Aufnahmeschuhe 14a, 14b, 14c angeordnet, mittels welchen das Feststofftriebwerk 10 beispielsweise an einem Hubschrauber oder an einem Flugzeug befestigt werden kann.

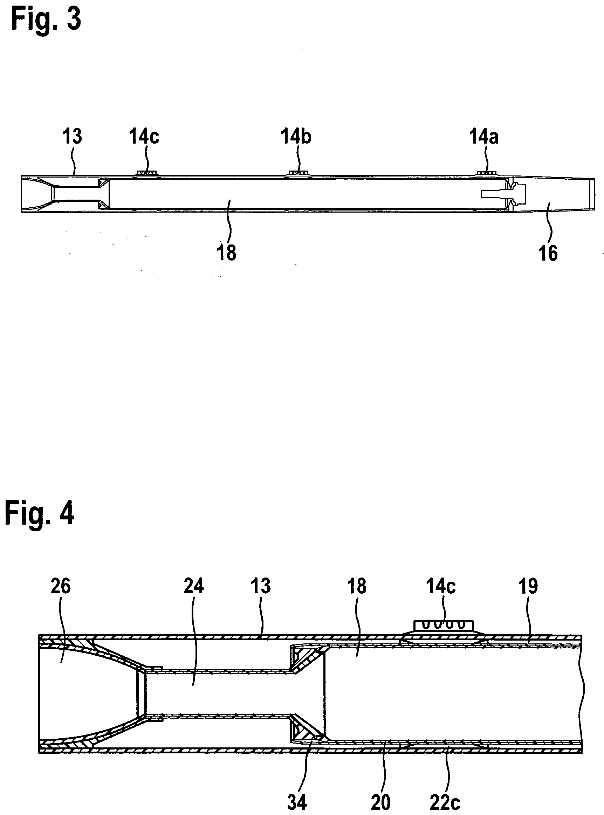

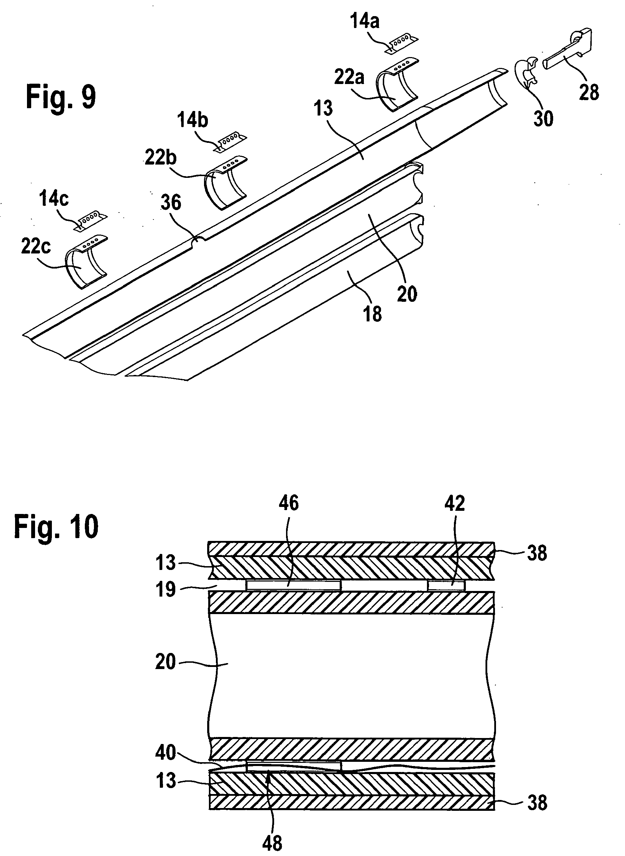

Weitere Einzelheiten illustriert die schematische Schnittdarstellung der Figur 3, welche einen Schnitt durch das Feststofftriebwerk 10 aus Figur 2 zeigt. Verglichen mit der Abbildung in Figur 2 ist das Feststofftriebwerk hier um 180° Grad gedreht, sodass der Gefechtskopf 16 am rechten Bildrand der Figur 3 wiedergegeben ist. Neben den bereits aus Figur 2 bekannten Aufnahmeschuhen 14a, 14b, 14c und der Außenhülle 13 ist in Figur 3 eine Isolierung 18 dargestellt, welche eine Brennkammer 20 nahezu vollständig auskleidet. Diese Brennkammer 20 ist in Figur 4, welche den linken Endbereich der Darstellung der Figur 3 vergrößert wiedergibt, und vor allem in der Explosionsdarstellung der Figur 9 deutlicher erkennbar.

Wie in Figur 4 ersichtlich ist, ist im dargestellten Ausführungsbeispiel die Brennkammer 20 beabstandet von der Außenhülle 13 angeordnet. Der zwischen der Brennkammer 20 und der Außenhülle 13 gebildete Hohlraum 19 dient einerseits als Isolierung, sodass ein Wärmeübergang von der im Betrieb des Triebwerks aerokinetisch aufgeheizten Außenhülle 13 auf die Brennkammer 20 reduziert ist. Dies verbessert die Insensitive-Munition-Eigenschaften des Triebwerks in der oben geschilderten Weise. Daneben bietet der Hohlraum 19 Platz, um zwischen der Brennkammer und der Außenhülle Kabel oder Kabelbäume für die Steuerung des Triebwerks oder Datensendeeinrichtungen, Datenempfangseinrichtungen, Antennen oder Steckverbinder anzuordnen. Diese Bauteile sind an sich bekannt und der besseren Übersicht halber in Figur 4 nicht dargestellt. Die Anordnung möglichst aller dieser Bauteile in dem zwischen Brennkammer 20 und Außenhülle 13 gebildeten Hohlraum 19 verbessert die Aerodynamik des Triebwerks 10, was sich bereits aus einem Vergleich der Darstellung der Figur 2 mit dem Stand der Technik aus Figur 1 erschließt. Während das Feststofftriebwerk 1 in Figur 1 neben Aufnahmeschuhen 4 Beschläge 5 und 6 aufweist, welche zudem an Aufdickungen 7 der Außenhülle 3 angeordnet sind, besitzt das Feststofftriebwerk 10 gemäß der Erfindung eine, abgesehen von den Aufnahmeschuhen 14a, 14b und 14c, glatte äußere Mantelfläche 12 der Außenhülle 13. Zwar sind in der Darstellung der Figur 2 keine den Beschlägen 5 oder 6 aus Figur 1 entsprechenden Beschlagteile vorgesehen, die beispielsweise der Befestigung von Tragflächen dienen, doch können diese, oder Anbauten allgemein, aufgrund der getrennten Ausführung von Außenhülle 13 und Brennkammer 20 grundsätzlich an jeder beliebigen Stelle der Außenhülle 13 angebracht, beispielsweise mittels Verbindungsmitteln befestigt werden. Dies ist möglich, da hierdurch die Druckbelastbarkeit der Brennkammer nicht beeinträchtigt wird aufgrund der baulichen Trennung von Brennkammer 20 und Außenhülle 13. Den Aufdickungen 7 aus Figur 1 entsprechende Verstärkungen oder Verstärkungsbeschläge können bei dem dargestellten Ausführungsbeispiel der Erfindung in dem Hohlraum 19 zwischen Brennkammer 20 und Außenhülle 13 angeordnet werden, sodass diese äußerlich nicht in Erscheinung treten und die Aerodynamik des Triebwerks 10 nicht negativ beeinträchtigen.

Im Ausführungsbeispiel der Figur 4 ist die Außenhülle 13 dazu ausgelegt, die im Betrieb des Triebwerks auftretenden Trägheitskräfte und Trägheitsmomente sowie daraus resultierende Biegekräfte aufzunehmen. Die Brennkammer 20 hingegen ist dazu ausgelegt, im Betrieb die in der Brennkammer 20 entstehenden Drücke aufzunehmen. Aufgrund dieser funktionalen Trennung können die verschiedenen Bauteile Außenhülle 13 und Brennkammer 20 einfacher und besser auf ihre Aufgaben hin optimiert werden. Im dargestellten Ausführungsbeispiel der Figuren 2 bis 9 ist die Außenhülle 13 aus einem hochtemperaturfesten Faserverbundwerkstoff gefertigt. Die Hochtemperaturfestigkeit wird dabei durch die Verwendung einer Hochtemperaturmatrix gewährleistet, beispielsweise einem Cyanatester. Die Brennkammer 20 ist ebenfalls aus einem Faserverbundwerkstoff gefertigt, allerdings einem, welcher oberhalb einer Zündungstemperatur eines in der Brennkammer 20 anordenbaren Festbrennstoffes instabil ist. Hierdurch ist die Sicherheit des vorliegenden Feststofftriebwerks gegen eine unbeabsichtigte Entzündung erhöht, insbesondere können auf diese Weise Slow-Cook-Off-Anforderungen erfüllt werden.

Wie Figur 4 zu entnehmen ist, mündet die mit der thermischen Isolierung 18 ausgekleidete Brennkammer 20 an ihrem linken Ende in ein Gasleitrohr 24, welches seinerseits in eine Austrittsdüse 26 mündet. Im Raum zwischen dem Gasleitrohr 24 und der Außenhülle 13 kann eine an sich bekannte und der besseren Übersichtlichkeit wegen nicht dargestellte Rudermaschine zur Richtungssteuerung des Triebwerks angeordnet werden. Ergänzend oder alternativ können weitere Bauteile an dieser Stelle angeordnet werden, insbesondere solche, welche aufgrund ihrer Dimensionierung in dem zwischen der Brennkammer 20 und der Außenhülle 13 gebildeten Hohlraum 19 keinen Platz finden. Die Befestigung des Gasleitrohres 24 an der Brennkammer 20 ist mit Hilfe eines Beschlagringes 34 realisiert. Etwaige in der Austrittsdüse 26 entstehende Schubkräfte können direkt von deren Befestigung aufgenommen werden.

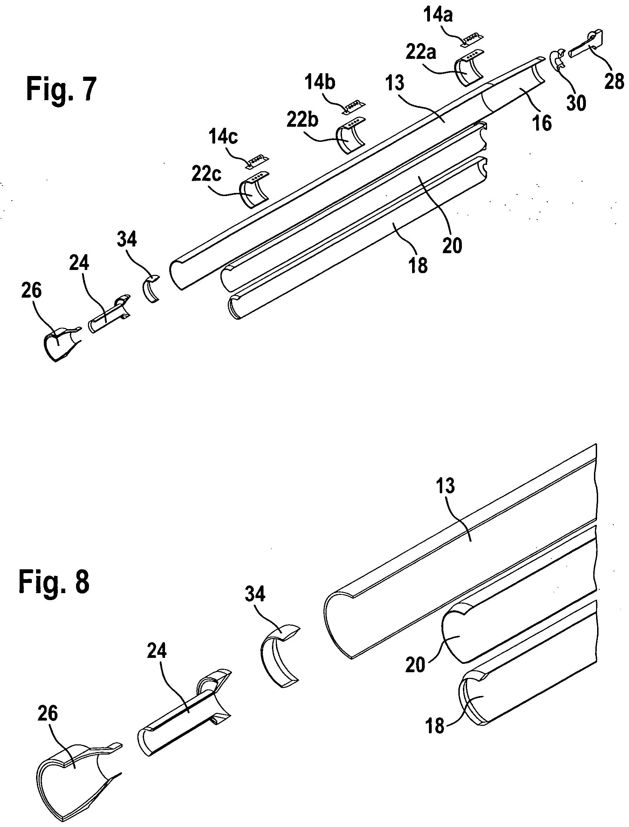

In dem unter anderem in Figur 4 dargestellten Ausführungsbeispiel ist die Brennkammer 20 in einem Spant 22c gehaltert, welcher zwischen der Außenhülle 13 und der Brennkammer 20 angeordnet ist. Die Halterung erfolgt dabei, indem der Spant die Brennkammer im Wesentlichen formschlüssig zumindest teilweise umgreift, doch ist der Formschluss mit einer Maßtoleranz ausgeführt, sodass der Brennkammer 20 ein gewisser Spielraum in dem Spant 22c verbleibt. Dies erleichtert das Montieren wie auch das Demontieren der Brennkammer 20, da sowohl bei der Außenhülle 13 wie auch bei der Brennkammer 20 Abweichungen von einer Idealform, beispielsweise einer Röhrenform, vorliegen. Diese können insbesondere bei bereits gebrauchten Außenhüllen 13 vorliegen. Anstatt eine Restbeweglichkeit der Brennkammer 20 in einem oder mehrerer der Spanten 22a, 22b, 22c zuzulassen, besteht auch die Möglichkeit die Brennkammer 20 in einem oder mehrerer dieser Spanten 22a, 22b, 22c durch eine Klemmung zu arretieren. Hinsichtlich der Lage der weiteren Spanten 22a, 22b wird an dieser Stelle auf die Explosionsdarstellung in Figur 7 verwiesen.

Bei geeigneter Anordnung der Spanten 22a, 22b, 22c innerhalb der Außenhülle 13, können diese zusätzlich der Steifigkeits- bzw. Stabilitätserhöhung der Außenhülle dienen, insbesondere an solchen Stellen, an welchen Beschläge oder andere Anbauten vorgesehen sind. Aus diesem Grund sind im vorliegenden ersten Ausführungsbeispiel die Spanten 22a, 22b, 22c im Bereich der Aufnahmeschuhe angeordnet und zudem jeweils mit einem Aufnahmeschuh 14a, 14b oder 14c verbunden. Diese Verbindung kann beispielsweise durch eine Verschraubung gewährleistet sein. Wie in Figur 4 erkennbar ist, liegt der Aufnahmeschuh 14c unmittelbar an der äußeren Mantelfläche 12 der Außenhülle 13 an. Die Außenhülle 13 wird zwischen dem Spant 22c und dem mit diesem verbundenen Aufnahmeschuh 14c geklemmt. Gleiches gilt für die Aufnahmeschuhe 14a und 14b sowie die Spanten 22a, 22b (vgl. Figur 7). Durch die beschriebene Klemmung wird die Außenhülle 13 an der Brennkammer befestigt. Alternativ oder ergänzend besteht die Möglichkeit, die Außenhülle 13 direkt mit einem oder mehrerer der Spanten 22a, 22b, 22c zu verbinden, beispielsweise durch eine Verschraubung.

Durch die beschriebene Verbindung der Aufnahmeschuhe 14a, 14b, 14c mit den Spanten 22a, 22b, 22c und die Klemmung oder anderweitige Befestigung der Außenhülle 13 an den Spanten werden die für die Befestigung des Triebwerks 10 an beispielsweise einem Flugzeug relevanten Lasteinleitungspunkte mit den Spanten 22a, 22b, 22c verbunden. Diese dienen dabei als stabilisierende Elemente ähnlich den Aufdickungen 7 im Stand der Technik (vgl. Figur 1). Im Unterschied zu diesen sind die Verstärkungen jedoch im Inneren des Triebwerks 10 angeordnet und beeinträchtigen somit die Aerodynamik des Triebwerks 10 nicht.

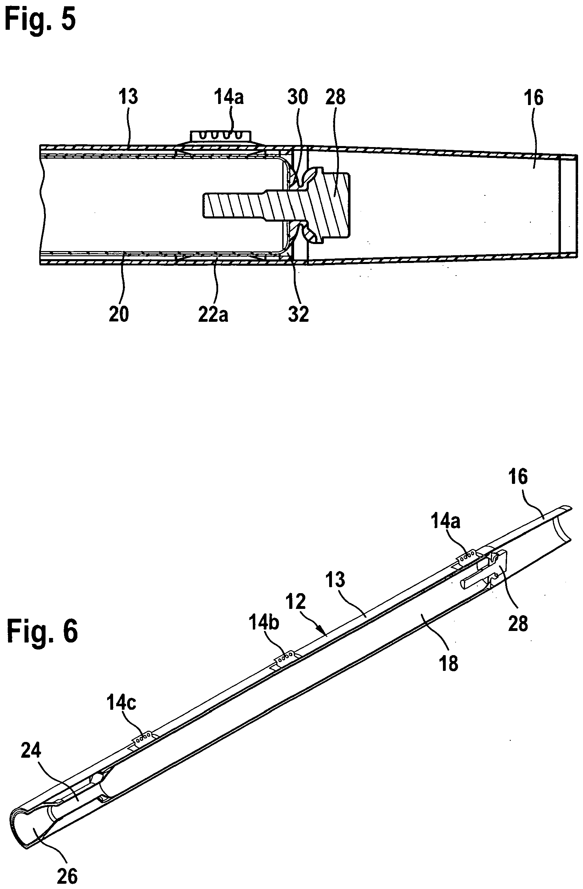

Figur 5 zeigt eine vergrößerte Teildarstellung des rechten Bildendes der Figur 3. Neben dem bereits angesprochenen Aufnahmeschuh 14a und dem erwähnten Spant 22a, welche jeweils in gleicher Weise ausgestaltet sind wie der beschriebene Aufnahmeschuh 14c bzw. der erwähnte Spant 22c, ist hierin eine Schürze 32 erkennbar, welche dazu dient ein Verschieben der Brennkammer 20 gegenüber der Außenhülle 13 zu verhindern. Weiterhin ist ein Anzünder 28 erkennbar, welcher in die Brennkammer 20 hineinreicht und dem Zünden eines in der Brennkammer 20 angeordneten Festbrennstoffes dient. Der Anzünder 28 ist dabei mittels einer Polkappe 30 an der Brennkammer 20 befestigt.

Der Gefechtskopf 16 ist in dem in Figur 5 gezeigten Ausführungsbeispiel konisch ausgebildet, sodass sich ein strömungsgünstiger Kalibersprung zu dessen rechtem Ende hin ergibt, an weichem üblicherweise eine Lenkeinrichtung mit einem verringerten Durchmesser angeordnet wird. Figur 6 zeigt die Schnittdarstellung der Figur 3 nochmals in einer perspektivischen Darstellung, in welcher die Öffnung am rechten Ende des Gefechtskopfes 16 erkennbar ist, an welcher das beschriebene Lenkteil beispielsweise angeordnet werden kann.

Figur 7 illustriert in einer Explosionsdarstellung des Schnittes aus Figur 3 die einzelnen Bauteile. Wie dieser entnommen werden kann, ist die Brennkammer 20 nahezu vollständig mit der thermischen Isolierung 18 ausgekleidet. Das linke bzw. rechte Ende der Darstellung der Figur 7 zeigen Figur 8 bzw. Figur 9 nochmals in vergrößerten Teildarstellungen.

Da im Ausführungsbeispiel der Figuren 2 bis 9 die Druckkräfte von der Brennkammer 20 aufgenommen werden, können in der Außenhülle 13 ohne Beeinträchtigung der Verdämmung eines Festbrennstoffes Überdruck- oder Montageöffnungen vorgesehen werden. So zeigt Figur 9 beispielhaft eine Kabelauslassöffnung 36, welche zunächst dazu dient, ein zwischen Brennkammer 20 und Außenhülle 13 angeordnetes Kabel auf die äußere Mantelfläche 12 der Außenhülle 13 zu führen und dort beispielsweise mit einem Sensor zu verbinden. Gleichzeitig dient die Kabelauslassöffnung 36 als Überdrucköffnung, damit bei unbeabsichtigter Entzündung eines Festbrennstoffes in der Brennkammer 20 ein entstehender Überdruck durch die Außenhülle 13 abgeführt werden kann, ehe diese explodiert. Dies entfaltet nur dann Wirkung, wenn nicht die Brennkammer 20 zuvor detoniert. Aus diesem Grund ist in dem vorliegenden Ausführungsbeispiel die Brennkammer aus einem instabilen Faserverbundwerkstoff gefertigt, der wie oben beschrieben, vor Erreichen der Zündungstemperatur des in der Brennkammer bzw. der Isolierung 18 angeordneten Festbrennstoffes mechanisch instabil wird, sodass ein nach Entzündung des Festbrennstoffes entstehender Druck durch die instabile Brennkammer 20 entweichen kann und unter anderem nachfolgend durch die Überdrucköffnung, welche durch die Kabelauslassöffnung 36 gebildet wird, auch durch die Außenhülle abgeführt werden kann.

Figur 10 zeigt ein zweites Ausführungsbeispiel eines erfindungsgemäßen Feststofftriebwerkes in einer schematischen Teilschnittdarstellung. In diesem ist die Außenhülle 13 nicht selbst hochtemperaturfest ausgeführt, sondern an seiner äußeren Mantelfläche 12 mit einer Temperaturschutzschicht 38 versehen. Diese kann beispielsweise durch eine hitzebeständige Keramik gebildet sein. Ferner illustriert Figur 10 ein in dem zwischen der Außenhülle 13 und der Brennkammer 20 gebildeten Hohlraum 19 angeordnetes Kabel 40 wie auch eine in diesem Hohlraum 19 angeordnete kombinierte Datenempfangs- und sendeeinrichtung 42. In der schematischen Darstellung der Figur 10 ist ferner ein Spant 46 erkennbar, welcher eine Aussparung 48 aufweist, durch welche das Kabel 40 hindurchgeführt ist.

### Bezugszeichenliste

- 1: Feststofftriebwerk
- 3: Außenhülle
- 4: Aufnahmeschuh
- 5: Beschlag
- 6: Beschlag
- 7: Aufdickung
- 10: Feststofftriebwerk
- 12: äußere Mantelfläche der Außenhülle
- 13: Außenhülle
- 14a: Aufnahmeschuh
- 14b: Aufnahmeschuh
- 14c: Aufnahmeschuh
- 16: Gefechtskopf
- 18: Isolierung
- 19: Hohlraum
- 20: Brennkammer
- 22a: Spant
- 22b: Spant
- 22c: Spant
- 24: Gasleitrohr
- 26: Austrittsdüse
- 28: Anzünder
- 30: Polkappe
- 32: Schürze
- 34: Beschlagring
- 36: Kabelauslassöffnung
- 38: Temperaturschutzschicht
- 40: Kabel
- 42: Datenempfangs-/sendeeinrichtung
- 46: Spant
- 48: Aussparung

## Patentansprüche

1. Feststofftriebwerk (10) mit einer Außenhülle (13) und einer innerhalb der Außenhülle (13) angeordneten Brennkammer (20),
wobei
a) die Brennkammer (20) als gesondertes, von der Außenhülle (13) getrenntes Bauteil ausgeführt ist,
b) die Brennkammer (20) aus einem oberhalb einer Grenztemperatur instabilen Faserverbundwerkstoff gefertigt ist, wobei die Grenztemperatur kleiner oder gleich einer Zündungstemperatur eines in der Brennkammer (20) anordenbaren Festbrennstoffes gewählt ist, und
c) zur thermischen Isolation eines in der Brennkammer (20) anordenbaren Festbrennstoffes gegenüber der Brennkammer (20) eine thermische Isolierung (18) innerhalb der Brennkammer (20) vorgesehen ist, welche die Brennkammer (20) vorzugsweise im Wesentlichen vollständig auskleidet.

2. Feststofftriebwerk nach Anspruch 1,
wobei die Außenhülle (13) dazu ausgelegt ist, im Betrieb des Triebwerks auftretende Trägheitskräfte und Trägheitsmomente aufzunehmen, und die Brennkammer (20) dazu ausgelegt ist, im Betrieb in der Brennkammer (20) entstehende Drücke aufzunehmen.

3. Feststofftriebwerk nach einem der vorangegangenen Ansprüche,
wobei die Brennkammer (20) beabstandet von der Außenhülle (13) angeordnet ist.

4. Feststofftriebwerk nach Anspruch 3,
wobei zwischen der Brennkammer (20) und der Außenhülle (13) wenigstens ein Element aus der Gruppe umfassend Kabel, Kabelbäume, Datensendeeinrichtungen, Datenempfangseinrichtungen, Antennen und Steckverbinder angeordnet ist.

5. Feststofftriebwerk nach einem der vorangegangenen Ansprüche,
wobei die Brennkammer (20) in wenigstens einem Spant (22a, 22b, 22c) gehaltert ist, welcher zwischen der Außenhülle (13) und der Brennkammer (20) angeordnet ist und vorzugsweise Aussparungen zur Durchführung von Kabeln aufweist.

6. Feststofftriebwerk nach Anspruch 5,
mit einer formschlüssigen Halterung der Brennkammer (20) in dem wenigstens einen Spant (22a, 22b, 22c).

7. Feststofftriebwerk nach einem der Ansprüche 5 bis 6,
mit einer maßtoleranten Halterung der Brennkammer (20) in dem wenigstens einen Spant (22a, 22b, 22c).

8. Feststofftriebwerk nach einem der Ansprüche 5 bis 7,
wobei zumindest ein Spant (22a, 22b, 22c) mit einem Aufnahmeschuh (14a, 14b, 14c) verbunden ist, welcher mittelbar oder unmittelbar an einer äußeren Mantelfläche (12) der Außenhülle (13) anliegt.

9. Feststofftriebwerk nach Anspruch 8,
wobei die Außenhülle (13) zwischen dem Spant (22a, 22b, 22c) und dem mit diesem verbundenen Aufnahmeschuh (14a, 14b, 14c) geklemmt ist.

10. Feststofftriebwerk nach einem der Ansprüche 5 bis 9,
wobei die Außenhülle (13) mit dem wenigstens einen Spant (22a, 22b, 22c) verbunden ist.

11. Feststofftriebwerk nach einem der vorangegangenen Ansprüche,
wobei die Brennkammer (20) mittels wenigstens einer Schürze (32) gegen ein Verschieben gegenüber der Außenhülle (13) gesichert ist.

12. Feststofftriebwerk nach einem der vorangegangenen Ansprüche,
mit einer aus einem hochtemperaturfesten Werkstoff, vorzugsweise einem Faserverbundwerkstoff mit Hochtemperaturmatrix, gefertigten Außenhülle (13).

13. Feststofftriebwerk nach einem der vorangegangenen Ansprüche,
wobei in der Außenhülle (13) vorgesehene Überdrucköffnungen (36), welche vorzugsweise durch Montageöffnungen (36) gebildet sind.

14. Feststofftriebwerk nach einem der vorangegangenen Ansprüche,
mit einer als modulares Bauteil (20, 18) ausgeführten Brennkammer (20).

## Claims

1. Solid-propellant motor (10) having an outer casing (13) and a combustion chamber (20) which is arranged within the outer casing (13),
wherein
a) the combustion chamber (20) is a separate component, which is separate from the outer casing (13),
b) the combustion chamber (20) is manufactured from a fiber composite material which is unstable above a limit temperature, wherein the limit temperature is chosen to be less than or equal to an ignition temperature of a solid propellant which can be arranged in the combustion chamber (20), and
c) thermal insulation (18), which preferably substantially completely clads the combustion chamber (20), is provided within the combustion chamber (20) for thermal insulation of a solid propellant, which can be arranged in the combustion chamber (20), from the combustion chamber (20).

2. Solid-propellant motor according to Claim 1,
wherein the outer casing (13) is designed to absorb inertia forces and inertia moments which occur during operation of the motor, and the combustion chamber (20) is designed to absorb pressures which occur during operation in the combustion chamber (20).

3. Solid-propellant motor according to one of the preceding claims,
wherein the combustion chamber (20) is arranged at a distance from the outer casing (13).

4. Solid-propellant motor according to Claim 3,
wherein at least one element from the group comprising cables, cable harnesses, data transmitting devices, data receiving devices, antennas and plug connectors is arranged between the combustion chamber (20) and the outer casing (13).

5. Solid-propellant motor according to one of the preceding claims,
wherein the combustion chamber (20) is held in at least one frame (22a, 22b, 22c), which is arranged between the outer casing (13) and the combustion chamber (20) and preferably has cutouts for cables to pass through.

6. Solid-propellant motor according to Claim 5,
with the combustion chamber (20) being held in an interlocking manner in the at least one frame (22a, 22b, 22c).

7. Solid-propellant motor according to one of Claims 5 or 6,
with the combustion chamber (20) being held with dimensional tolerances in the at least one frame (22a, 22b, 22c).

8. Solid-propellant motor according to one of Claims 5 to 7,
wherein at least one frame (22a, 22b, 22c) is connected to a holding lug (14a, 14b, 14c), which rests indirectly or directly on an outer casing surface (12) of the outer casing (13).

9. Solid-propellant motor according to Claim 8,
wherein the outer casing (13) is clamped between the frame (22a, 22b, 22c) and the holding lug (14a, 14b, 14c) which is connected to it.

10. Solid-propellant motor according to one of Claims 5 to 9,
wherein the outer casing (13) is connected to the at least one frame (22a, 22b, 22c).

11. Solid-propellant motor according to one of the preceding claims,
wherein the combustion chamber (20) is secured by means of at least one skirt (32) against movement with respect to the outer casing (13).

12. Solid-propellant motor according to one of the preceding claims,
having an outer casing (13) which is manufactured from a high-temperature-resistant material, preferably from a fiber composite material with a high-temperature matrix.

13. Solid-propellant motor according to one of the preceding claims,
wherein overpressure openings (36) are provided in the outer casing (13), which are preferably formed by mounting openings (36).

14. Solid-propellant motor according to one of the preceding claims,
having a combustion chamber (20) which is in the form of a modular component (20, 18).

## Revendications

1. Groupe propulseur à propergol solide (10), comprenant une gaine extérieure (13) et une chambre de combustion (20) disposée à l'intérieur de la gaine extérieure (13),
a) la chambre de combustion (20) étant réalisée sous la forme d'un élément structural distinct, séparé de la gaine extérieure (13),
b) la chambre de combustion (20) étant fabriquée dans un matériau renforcé par des fibres qui est instable au-dessus d'une température limite, la température limite étant choisie inférieure ou égale à une température d'allumage d'un combustible solide qui peut être disposé dans la chambre de combustion (20), et
c) une isolation thermique (18) se trouvant à l'intérieur de la chambre de combustion (20), laquelle est destinée à l'isolation thermique, par rapport à la chambre de combustion (20), d'un combustible solide qui peut être disposé dans la chambre de combustion (20) et laquelle habille de préférence sensiblement entièrement la chambre de combustion (20).

2. Groupe propulseur à propergol solide selon la revendication 1, la gaine extérieure (13) étant conçue pour absorber les forces d'inertie et les moments d'inertie qui surviennent lors du fonctionnement du groupe propulseur, et la chambre de combustion (20) étant conçue pour absorber les pressions produites dans la chambre de combustion (20) durant le fonctionnement.

3. Groupe propulseur à propergol solide selon l'une des revendications précédentes, la chambre de combustion (20) étant montée espacée de la gaine extérieure (13).

4. Groupe propulseur à propergol solide selon la revendication 3, au moins un élément faisant partie du groupe comprenant des câbles, des faisceaux de câbles, des dispositifs d'émission de données, des dispositifs de réception de données, des antennes et des connecteurs étant disposé entre la chambre de combustion (20) et la gaine extérieure (13).

5. Groupe propulseur à propergol solide selon l'une des revendications précédentes, la chambre de combustion (20) étant maintenue dans au moins une membrure (22a, 22b, 22c), laquelle est disposée entre la gaine extérieure (13) et la chambre de combustion (20) et possède de préférence des cavités servant au passage de câbles.

6. Groupe propulseur à propergol solide selon la revendication 5, comprenant un maintien par complémentarité de formes de la chambre de combustion (20) dans l'au moins une membrure (22a, 22b, 22c).

7. Groupe propulseur à propergol solide selon l'une des revendications 5 à 6, comprenant un maintien avec tolérance dimensionnelle de la chambre de combustion (20) dans l'au moins une membrure (22a, 22b, 22c).

8. Groupe propulseur à propergol solide selon l'une des revendications 5 à 7, au moins une membrure (22a, 22b, 22c) étant reliée à un patin d'accueil (14a, 14b, 14c) qui repose directement ou indirectement sur une enveloppe extérieure (12) de la gaine extérieure (13).

9. Groupe propulseur à propergol solide selon la revendication 8, la gaine extérieure (13) étant serrée entre la membrure (22a, 22b, 22c) et le patin d'accueil (14a, 14b, 14c) qui est relié à celle-ci.

10. Groupe propulseur à propergol solide selon l'une des revendications 5 à 9, la gaine extérieure (13) étant reliée à l'au moins une membrure (22a, 22b, 22c).

11. Groupe propulseur à propergol solide selon l'une des revendications précédentes, la chambre de combustion (20) étant protégée au moyen d'au moins un tablier (32) contre un décalage par rapport à la gaine extérieure (13).

12. Groupe propulseur à propergol solide selon l'une des revendications précédentes, comprenant une gaine extérieure (13) fabriquée en un matériau résistant aux hautes températures, de préférence un matériau renforcé par des fibres ayant une matrice à haute température.

13. Groupe propulseur à propergol solide selon l'une des revendications précédentes, des ouvertures de surpression (36) se trouvant dans la gaine extérieure (13), les ouvertures de surpression étant de préférence formées par des ouvertures de montage (36).

14. Groupe propulseur à propergol solide selon l'une des revendications précédentes, comprenant une chambre de combustion (20) réalisée sous la forme d'un élément structural modulaire (20, 18).
